# EUROPÄISCHE PATENTSCHRIFT

(11) **EP 0 537 522 B1**
(45) Veröffentlichungstag und Bekanntmachung des Hinweises auf die Patenterteilung: **01.09.1999**
(21) Anmeldenummer: 92116343.2
(22) Anmeldetag: 24.09.1992
(51) Int. Cl.: G06F 17/40, G06K 17/00

(54) **Vorrichtung und Verfahren zum Erfassen, ggf. Verarbeiten, Speichern und Übertragen von Daten jeglicher Art**
Apparatus and method for collecting, possibly processing, storing and transmitting al kinds of data
Appareil et procédé pour la saisie, éventuellement le traitement, l'enregistrement et la transmission de toutes sortes de données

(30) Priorität: 16.10.1991 DE 4134225
(43) Veröffentlichungstag der Anmeldung: 21.04.1993
(73) Patentinhaber: INES Elektronik-Systementwicklung-Produktions GmbH, 84453 Mühldorf (Inn) (DE)
(72) Erfinder: Femböck, Josef, 84524 Neuötting (DE)
(74) Vertreter: Naumann, Ulrich, Dr.-Ing.

(56) Entgegenhaltungen:
- EP-A- 0 157 477
- WO-A-92/10803
- DE-A- 4 008 917
- US-A- 4 889 977
- US-A- 5 227 988
- PATENT ABSTRACTS OF JAPAN Bd. 015, Nr. 382 (P-1257) 26 September 1991 & JP 03 152 681 A (NIPPON STEEL CORP) 28 Juni 1991

## Beschreibung

Die vorliegende Erfindung betrifft eine Vorrichtung zum Erfassen, ggf. Verarbeiten, Speichern und Übertragen von Daten jeglicher Art mit mindestens einem vorzugsweise berührungslos arbeitenden Sensor als Datenerfassungseinrichtung, ggf. einem Mikroprozessor, einer Datenspeichereinrichtung und einer Datenübertragungseinrichtung, wobei die Datenerfassungseinrichtung und die Datenübertragungseinrichtung integral in vorzugsweise einem Gehäuse quasi monolitisch angeordnet sind. Des weiteren betrifft die vorliegende Erfindung ein Verfahren zum mobilen Erfassen, ggf. Verarbeiten, Speichern und Übertragen von Daten jeglicher Art, insbesondere unter Verwendung der erfindungsgemäßen Vorrichtung.

Vorrichtungen und Verfahren der in Rede stehenden Art sind in Form von Datenverarbeitungsstationen mit entsprechenden Ein- und Ausgabeperipherien seit Jahren aus der Praxis bekannt. Die Handhabung solcher Vorrichtungen eignet sich jedoch nur wenig für den mobilen Bereich, zumal diese Vorrichtungen aufgrund der erforderlichen Peripherie einen erheblichen Platzbedarf mit sich bringen und umständlich in der Handhabung sind. Zur Datenerfassung werden bislang die Daten oder die datentragenden Einrichtungen meist zu der Datenerfassungseinrichtung gebracht, da deren Mobilität stets nur begrenzt ist. So sind beispielsweise Barcode-Leseeinrichtungen an Registrierkassen in Supermärkten oder dergleichen vorgesehen, wobei die zu registrierende Ware bzw. der zu registrierende Preis der Ware von der zur Datenerfassungseinrichtung gebrachten Ware bzw. dem dort vorgesehen Etikett abgelesen werden muß.

Es gibt jedoch zahlreiche Anwendungsbereiche, bei denen Vorrichtungen der in Rede stehenden Art zu einem Gerät, einer Maschine oder dergleichen gebracht werden müssen, um dort Maschinen- bzw. gerätespezifische Daten abzulesen oder zu detektieren. Ein solcher Bedarf besteht beispielsweise bei der TÜV-Prüfung eines Kraftfahrzeugs, bei der die technischen Prüfer derzeit in umständlicher und mühevoller Weise ein ggf. computerlesbares Formular ausfüllen bzw. dort vorgesehene Felder markieren. Insbesondere im Kraftfahrzeugbereich und generell in Schmutz oder gar Schadstoffe enthaltenden Umgebungen ist jedoch die Handhabung eines auszufüllenden Formulars äußerst schwierig und stört grundsätzlich bei der eigentlichen Prüfung des Kraftfahrzeugs. Des weiteren ist es äußerst umständlich, die mühsam zu Blatt gebrachten Informationen bzw. Daten zum Erhalt eines Prüfresultats oder dergleichen aufzubereiten. Eine maschinelle Auswertung beispielsweise des TÜV-Prüfergebnisses eines Kraftfahrzeugs ist zumindest mit bisherigen Mitteln nahezu unmöglich.

Ein ähnlich gelagertes Problem tritt beispielsweise beim Ablesen von Gas-, Wasser- und/oder Stromzählern auf. Auch hier werden Daten nach wie vor mühsam abgelesen, per Hand notiert und ggf. später einer weiterführenden Datenverarbeitung zugeführt. Dieses Verfahren ist zeitaufwending und birgt zahlreiche Fehlerquellen in sich.

Lediglich beispielhaft sei hier ein ähnlich gelagertes Problem bei der Steuerung von Maschinen und der Zuführung von zu bearbeitenden Werkstücken bzw. Halbzeugen genannt. Auch hier sind Daten vor Ort zu erfassen bzw. Daten auf andere Datenträger, Maschinen oder dergleichen zu übertragen.

Aus der Druckschrift DE 40 08 917 A1 ist ein Ablesesystem für das Ablesen von Verbrauchszählern zur Bestimmung des Strom-, Gas- oder Wasserverbrauchs bekannt. Dieses Ablesesystem besteht im wesentlichen aus einer Dateneingabeeinheit und einer Datenaufzeichnungs-Steuereinheit, zwischen denen Daten mittels Funkübertragung ausgetauscht werden. Die bekannte Vorrichtung ist ausschließlich für eine einzige vorgegebene Anwendung, nämlich das Ablesen von Verbrauchszählern, die mit einem Stabcode identifizierbar sind, konfiguriert. Dafür sind zwei verschiedene Datenerfassungsprinzipien vorgesehen, nämlich zum einen die optische Erfassung eines Stabcodes und zum anderen die manuelle Eingabe von Ablesewerten über eine Tastatur. Die bekannte Vorrichtung muß zur Datenerfassung vom Benutzer aktiv bedient werden, indem der Stabcodeleser über den zu erfassenden Stabcode geführt wird und auch indem der aktuelle Zählerstand als zu erfassende Größe zunächst vom Benutzer abgelesen und anschließend manuell eingetippt wird.

Die bekannte Vorrichtung ist in der Praxis problematisch, insbesondere für Anwendungen, bei denen die zeitliche Entwicklung einer Meßgröße über einen bestimmten Zeitraum erfaßt und gespeichert werden soll. Schnelle zeitliche Schwankungen einer solchen Meßgröße können nur sehr unzureichend und oftmals fehlerhaft durch eine manuelle Eingabe von Meßwerten erfaßt werden. Zudem kann in einer bestimmten Zeit nur eine begrenzte Anzahl von Ziffern manuell eingetippt werden, was sich auf die Genauigkeit der erfaßten Daten auswirkt. Außerdem sind die Anwendungsmöglichkeiten der bekannten Vorrichtung durch ihre spezielle Konfigurierung, insbesondere ihre begrenzten Datenerfassungsmöglichkeiten, sehr beschränkt.

Die Lehre der vorliegenden Patentanmeldung geht vom Stand der Technik aus, der sich aus der Druckschrift Patent Abstract of Japan, Volume 15, No. 382, (P-1257) (JP3 152 681 A), vom 26.09.91 ergibt. Gegenstand dieser Druckschrift ist ein Datenaufzeichnungsgerät, an das wahlweise verschiedene Sensoreinheiten zur Datenerfassung ankoppelbar sind, wobei sich die Auswahl der Sensoreinheit nach der Art der zu erfassenden Daten, d.h. nach der jeweiligen Anwendung, richtet. Der ausgewählte Sensortyp wird mit Hilfe eines Mikroprozessors (Central Controller) identifiziert. Außerdem umfaßt das bekannte Datenerfassungsgerät eine Lesevorrichtung für Daten- bzw. Programmkarten. Zu jeder der ankoppelbaren Sensoreinheiten gehört eine Programmkarte, auf der Programme zum Verarbeiten der mit der zugehörigen Sensoreinheit erfaßten Daten abgespeichert sind.

Das bekannte Datenaufzeichnungsgerät kann also mit Hilfe unterschiedlichster, weil austauschbarer Sensoreinheiten unterschiedlichste Meßdaten erfassen und diese Meßdaten mit Hilfe der den jeweiligen Sensoreinheiten zugeordneten Programmkarten auch verarbeiten, um die so verarbeiteten und gegebenenfalls auch schon ausgewerteten Meßdaten abzuspeichern.

Der vorliegenden Erfindung liegt daher die Aufgabe zugrunde, die bekannte Vorrichtung zum Erfassen, ggf. Verarbeiten, Speichern und Übertragen von Daten jeglicher Art so auszugestalten und weiterzubilden, daß sie vielseitig, für unterschiedliche Anwendungen, bei denen Daten an beliebigen Orten erfaßt und weitergegeben werden sollen, einsetzbar ist.

Die erfindungsgemäße Vorrichtung zum Erfassen, ggf. Verarbeiten, Speichern und Übertragen von Daten jeglicher Art, bei der die zuvor aufgezeigte Aufgabe gelöst ist, ist durch die Merkmale des Patentanspruches 1 beschrieben. Danach ist die erfindungsgemäße Vorrichtung je nach Anwendungsbereich und Einsatzgebiet mit unterschiedlichen, d.h. nach unterschiedlichen Detektionsprinzipien arbeitenden Sensoren, ausrüstbar, in dem die Sensoren als miniaturisierte Peripheriegeräte an dem Gehäuse - über entsprechende Schnittstellen - anbringbar sind.

Erfindungsgemäß ist zunächst erkannt worden, daß es für eine Vielzahl von Anwendungen vorteilhaft ist, wenn zur Erfassung ggf. Verarbeitung, Speicherung und Übertragung von Daten, wie Meßgrößen oder Identifikationsdaten, mobile Einrichtungen verwendet werden, die ggf. mit einer stationären Datenverarbeitungsanlage kommunizieren. Es ist ferner erkannt worden, daß zur Verarbeitung, Speicherung und Übertragung von Daten immer dieselben Mittel bzw. Einrichtungen erforderlich sind, unabhängig davon, in welchem Zusammenhang diese Daten erfaßt werden bzw. welche Art von Meßgrößen sie darstellen. So können bspw. zur Speicherung und Übertragung von während eines Experiments mittels eines Sensors erfaßten Temperaturwerten dieselben Einrichtungen verwendet werden, wie zur Speicherung und Übertragung von als Identifikationsmittel dienenden Strichcodes. Es ist schließlich erkannt worden, daß eine Vorrichtung zum Erfassen, ggf. Verarbeiten, Speichern und Übertragen von Daten jeglicher Art auf einfache Weise an verschiedene Anwendungsbereiche angepaßt werden kann, indem unterschiedliche Sensoren, die nach unterschiedlichen Detektionsprinzipien arbeiten, verwendet werden. Dazu sind lediglich entsprechende Schnittstellen erforderlich.

Hinsichtlich der Datenerfassung ist es von besonderem Vorteil, wenn die Datenerfassungseinrichtung als vorzugsweise berührungslos arbeitender Sensor bzw. als Gruppe von Sensoren ausgeführt ist. Bei diesem Sensor kann es sich in ganz besonders vorteilhafter Weise um einen Lichtsensor, genauer gesagt um einen Barcode-Lesestift, handeln. Im Rahmen einer solchen Ausgestaltung wäre das Gehäuse des Barcode-Lesestifts auch gleichzeitig das Gehäuse der erfindungsgemäßen Vorrichtung, so daß in diesen Lesestift ggf. ein Mikroprozessor, eine Datenspeichereinrichtung und eine Datenübertragungseinrichtung integriert wären. Folglich handelte es sich hier um einen besonders miniaturisierten mobilen Datenspeicher mit eigener Eingabe- und Ausgabestation.

Ein solcher mobiler Datenspeicher ließe sich in idealer Weise bei der TÜV-Prüfung eines Kraftfahrzeugs verwenden, wobei die Informationen den jeweiligen Prüfstationen direkt gemäß licht-optischer Anzeige entnommen werden könnten.

Der Sensor oder zumindest einer der Sensoren könnte des weiteren als Temperatursensor ausgeführt sein. Ein solcher integrierter Sensor könnte beispielsweise die Prozeßtemperatur oder die Raumtemperatur eines zu überwachenden Raumes beim Durchlaufen des Raumes direkt detektieren. Auch diese Daten könnten direkt in der mobilen Datenspeichereinrichtung abgelegt werden.

Des weiteren ist es denkbar, daß der Sensor als kapazitiver, induktiver oder nach dem Wirbelstromprinzip arbeitender Sensor ausgeführt ist. In einem solchen Falle könnte die erfindungsgemäße mobile Vorrichtung zum Zählen von Geldstücken, zur Kontrolle von Fertigungsvorgängen, etc. verwendet werden. Insbesondere im Rahmen von Stichprobenkontrollen ließe sich die mobile Vorrichtung an beliebigen Stellen und mit unterschiedlichsten Sensoren ausgerüstet einsetzen, wobei der Raumbedarf für die Vorrichtung minimal ist.

Wesentlich ist jedenfalls, daß die Sensoren bzw. die Gruppe von Sensoren nicht auf einen bestimmten Sensortyp festgelgt sind. Vielmehr lassen sich je nach Anwendungsbereich Sensoren unterschiedlichster Detektionsprinzipien verwenden.

Die Miniaturisierung der erfindungsgemäßen Vorrichtung ist jedenfalls dadurch begünstigt, daß die Datenspeichereinrichtung selbst miniaturisiert ist und in dem Gehäuse des Sensors bzw. der Sensoren, beispielsweise des Barcode-Lesestifts, integriert ist. Ohne weiteres ist es jedoch auch denkbar, daß die miniaturisierte Datenspeichereinrichtung in einem sehr kleinen Gehäuse untergebracht ist und daß die Datenerfassungseinrichtung bzw. die Sensoren als miniaturisierte Peripheriegeräte an dieses Gehäuse - über entsprechende Schnittstellen - anbringbar sind.

Weiter ist es von besonderem Vorteil, wenn die Datenspeichereinrichtung vorzugsweise fest vorgegebene Daten zur Identifizierung der Datenspeichereinrichtung bzw. zur Identifizierung der Vorrichtung insgesamt enthält. Gerade im Rahmen des zuvor geschilderten Beispiels der Kraftfahrzeugprüfung beim TÜV würde einem zu prüfenden Kraftfahrzeug eine bestimmte Datenspeichereinrichtung bzw. eine bestimmte erfindungsgemäße Vorrichtung zugeordnet werden, was über die Zuordnung des Codes einer Datenspeichereinrichtung zu dem jeweiligen Kraftfahrzeug geschehen könnte.

Insbesondere dann, wenn mit der erfindungsgemäßen Vorrichtung Meßgeräte, Prüfgeräte, Maschinen oder dergleichen aktiviert oder gar gesteuert werden sollen, ist es von weiterem Vorteil, wenn die Datenspeichereinrichtung Programme zur Aktivierung bzw. Steuerung externer Geräte oder dergleichen enthält, so daß beim Ankoppeln der Dateneingabeeinrichtung und/oder Datenübertragungseinrichtung an die jeweiligen Geräte die Programme an die Geräte übertragbar sind. Im Falle der Vorkehrung eines Mikroprozessors innerhalb der erfindungsgemäßen Vorrichtung könnten die in Rede stehenden Geräte, Maschinen oder dergleichen sogar insgesamt fremdgesteuert werden, so daß die erfindungsgemäße Vorrichtung sogar im Sinne eines Prozeßrechners arbeitet. Zur weiteren Verarbeitung der ermittelten bzw. gelesenen und abgespeicherten Daten könnte die Vorrichtung insgesamt an einen zentralen Rechner zur Datenweiterverarbeitung gegeben werden. Ebenso wäre es jedoch auch denkbar, daß die Datenspeichereinrichtung, vorzugsweise über eine Steckeinrichtung oder dergleichen, beliebig austauschbar ist. Insoweit wäre es lediglich erforderlich, die Datenspeichereinrichtung abzuziehen bzw. herauszunehmen und in eine entsprechende Leseeinrichtung eines Zentralrechners zu geben.

Hinsichtlich des Betriebes der erfindungsgemäßen Vorrichtung ist es von besonderem Vorteil, wenn die Vorrichtung bzw. die dort vorgesehene Datenspeichereinrichtung über eine Batterie oder einen integrierten Akkumulator mit elektrischer Energie versorgt wird. Bei Verwendung eines Akkumulators wäre es wiederum von besonderem Vorteil, wenn sich dieser induktiv, d.h. ohne Herausnehmen aus der erfindungsgemäßen Vorrichtung, aufladen ließe.

Im Hinblick auf eine vielseitige Verwendung der erfindungsgemäßen Vorrichtung ist es von weiterem Vorteil, wenn die Datenübertragungseinrichtung sowohl zur Datenausgabe aus der Datenspeichereinrichtung als auch zur Dateneingabe in die Datenspeichereinrichtung dient. Folglich ließen sich detektierte Daten über die Datenübertragungseinrichtung beispielsweise an einen Zentralrechner weitergeben. Updates von Steuerungsprogrammen ließen sich während der üblichen Handhabung der erfindungsgemäßen Vorrichtung an die jeweiligen Meßgeräte, Maschinen oder dergleichen mühelos übertragen.

Die Datenübertragung selbst könnte über entsprechende Kommunikationsleitungen oder gar drahtlos erfolgen. Entsprechend wären drahtgebundene oder drahtlose Kommunikationsschnittstellen als Datenübertragungseinrichtung erforderlich. Des weiteren könnte die Datenübertragungseinrichtung als kombinierte Sender-/Empfängereinheit ausgeführt sein, wodurch die Datenübertragung gleich an der Meßstelle bzw. am Meßort hin zu einer Empfangsstation zur Weiterverarbeitung der detektierten Daten erfolgen kann. Dazu ließe sich die Datenübertragungseinrichtung in weiter vorteilhafter Weise als kombinierte Infrarot-Sender-/Empfängereinheit ausführen. Zur Datenübertragung auf weite Distanzen könnte der Infrarot-Sender zwei vorzugsweise in Serie geschaltete Senderdioden aufweisen, wobei der Infrarot-Empfänger eine vorgebbare Wellenlänge des Infrarotlichtes dedektieren würde. Sowohl das Aussenden als auch die Detektion modulierter Wellenlängen wäre ohne weiteres möglich.

Schließlich sei hinsichtlich der erfindungsgemäßen Vorrichtung angemerkt, daß die Datenübertragungseinrichtung auch gleichzeitig mehrere Kommunikationsschnittstellen aufweisen kann, wobei diese Kommunikationsschnittstellen auf unterschiedlichen Kommunikationsprinzipien basieren können.

Das erfindungsgemäße Verfahren zum mobilen Erfassen, ggf. Verarbeiten, Speichern und Übertragen von Daten jeglicher Art, insbesondere unter Verwendung der zuvor erörterten erfindungsgemäßen Vorrichtung, ist durch die Merkmale des Patentanspruches 14 gekennzeichnet. Danach umfaßt das in Rede stehende Verfahren folgende Verfahrensschritte: Zunächst einmal werden Daten jeglicher Art mittels einer Datenerfassungseinrichtung erfaßt. Diese Daten werden durch einen Mikro-Prozessor - sofern vorhanden - verarbeitet bzw. manipuliert. Diese ggf. verarbeiteten und manipulierten Daten werden dann in einer Datenspeichereinrichtung gespeichert und schließlich aus dem Speicher bzw. der Datenspeichereinrichtung auf ein externes Speichermedium oder einen externen Prozessor mittels einer Datenübertragungseinrichtung übertragen. Hierbei ist wesentlich, daß sämtliche Bausteine der mit dem erfindungsgemäßen Verfahren verwendeten Vorrichtung im Sinne eines Monoliten vorzugsweise innerhalb eines Gehäuses angeordnet sind.

In weiter vorteilhafter Weise umfaßt die Datenerfassung das Einspeisen von Daten über eine geeignete Schnittstelle bzw. drahtlos, wobei die Daten von Meßgeräten, Maschinen, PC's oder dergleichen generiert werden.

Schließlich ist wesentlich, daß in der Datenspeichereinrichtung Steuerdaten zur Steuerung von Meßgeräten, Maschinen, Rechnern oder dergleichen abgelegt werden können, die über die Datenübertragungseinrichtung an die Meßgeräte, Maschinen, Rechner oder dergleichen in ggf. verarbeiteter Form übertragbar sind.

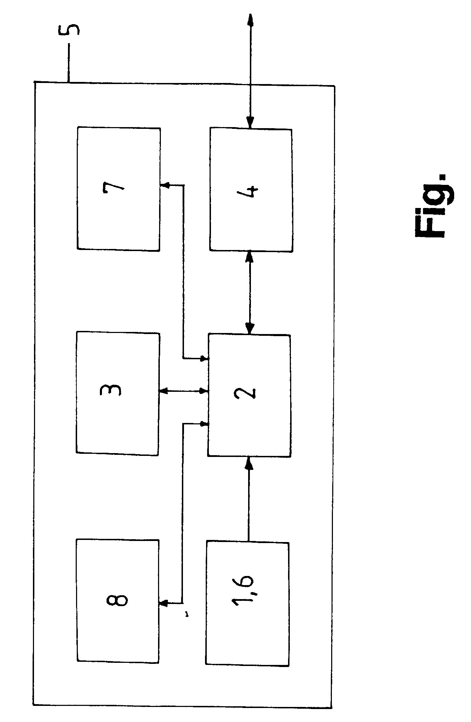

Es gibt nun verschiedene Möglichkeiten, den Gegenstand der vorliegenden Erfindung in vorteilhafter Weise auszugestalten und weiterzubilden. Dazu ist einerseits auf die nachgeordneten Patentansprüche, andererseits auf die Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen der Lehre erläutert. In der Zeichnung zeigt die einzige Figur in schematischer Darstellung ein Blockbild eines Ausführungsbeispiels einer erfindungsgemäßen Vorrichtung zum Erfassen, ggf. Verarbeiten, Speichern und Übertragen von Daten jeglicher Art.

Gemäß dem Blockschaltbild der einzigen Figur umfaßt die erfindungsgemäße Vorrichtung zum Erfassen, Verarbeiten, Speichern und Übertragen von Daten jeglicher Art eine Datenerfassungseinrichtung 1, einen Mikroprozessor 2, eine Datenspeichereinrichtung 3 und eine Datenübertragungseinrichtung 4. Die Datenerfassungseinrichtung 1, der Mikroprozessor 2, die Datenspeichereinrichtung 3 und die Datenübertragungseinrichtung 4 sind integral in einem in der einzigen Figur lediglich angedeuteten Gehäuse 5 quasi monolitisch angeordnet.

Die Datenerfassungseinrichtung 1 weist in dem hier gewählten Ausführungsbeispiel Sensoren 6 auf, die beispielsweise als Barcode-Lesestift ausgeführt sind. Ebenso könnte ein Temperatursensor oder ein sonstiger Sensor vorgesehen sein.

Die hier gewählte Datenspeichereinrichtung 3 ist miniaturisiert und ebenfalls in dem Gehäuse 5 angeordnet.

Die Datenübertragungseinrichtung 4 ist als Kommunikationsschnittstelle ausgeführt, wobei es sich hier sowohl um eine drahtlose als auch um eine drahtgebundene Kommunikationsschnittstelle handeln kann. Im Falle einer drahtlosen Ausführung der Kommunikationsschnittstelle könnte es sich bei der Datenübertragungseinrichtung um eine kombinierte Sender-/Empfängereinheit handeln.

Die einzige Fig. zeigt des weiteren, daß zusätzlich ein EEPROM-Speicher 7 zur beliebigen Parameterablage vorgesehen sein kann, wobei dieser EEPROM-Speicher 7 mit dem Mikroprozessor 2 verbunden ist.

Hinsichtlich des erfindungsgemäßen Verfahrens wird auf die Ausführungen im allgemeinen Teil der Beschreibung verwiesen.

Nachfolgend werden kurz Anwendungsbeispiele der erfindungsgemäßen Vorrichtung bzw. des erfindungsgemäßen Verfahrens beschrieben. Im Rahmen einer Kraftfahrzeugprüfung, beispielsweise beim TÜV, würden an einer Annahmestelle die Daten des Kraftfahrzeuges in die EDV aufgenommen und mittels einer geeigneten Schnittstelle in die erfindungsgemäße mobile Vorrichtung eingespielt werden. Zu Beginn der Kraftfahrzeugprüfung nimmt dann der Prüfer die erfindungsgemäße Vorrichtung mit den kraftfahrzeugspezifischen Daten und fährt mit dem zu prüfenden Kraftfahrzeug durch die gesamte Prüfstation hindurch. Visuell vom Prüfer selbst aufzunehmende Prüfdaten, beispielsweise Licht, Rost, sonstige lichtoptischen Mängel, können beispielsweise über einen Barcode von einer entsprechenden Checkliste aus über einen Barcode-Lesestift durch überstreichen der Checkliste eingelesen werden, wobei der Barcode-Lesestift selbst die gesamte erfindungsgemäße Vorrichtung als integrale Bestandteile enthalten könnte.

Meßgerätedaten werden dann über entsprechende Schnittstellen drahtlos oder drahtgebunden ebenfalls auf die erfindungsgemäße Vorrichtung überspielt. Hierbei könnte eine Zeiterfassung mitlaufen bzw. erfolgen, d.h. die erfindungsgemäße Vorrichtung mit dem mobilen Datenspeicher würde den gesamten Prüfablauf über die Prüfstrecke hinweg registrieren bzw. abspeichern. Sämtliche Informationen werden - mobil - gesammelt und nach Abschluß der Kraftfahrzeugprüfung wieder über eine Schnittstelle, nämlich die Datenübertragungseinrichtung, an eine externe Auswerteeinheit übertragen. In dem zuvor geschilderten Verfahren mit der erfindungsgemäßen Vorrichtung liegt ein erheblicher Vorteil darin, daß die zur Prüfung des Kraftfahrzeugs erforderlichen Prüfgeräte untereinander keinerlei Kommunikationsverbindungen benötigen. Auch ist die Reihenfolge des Prüfungsablaufs sowie der zeitliche Ablauf ohne Bedeutung. Im Falle eines Defekts oder Ausfalls eines Prüfgerätes kann ohne weiteres ein Ersatzgerät herangezogen werden, ohne daß eine Manipulation an der erfindungsgemäßen Vorrichtung zu erfolgen hat.

Sofern der Speicher der erfindungsgemäßen mobilen Vorrichtung groß genug ist, können vor Beginn der Kraftfahrzeugprüfung auch Programme bzw. Steuerprogramme für die zu verwendenden Prüfgeräte mit übertragen werden. Wird dann ein Prüfgerät bzw. eine Prüfstation angefahren, so erhält diese Prüfstation nicht nur Steuerbefehle zur Aktivierung eines automatischen Prüfablaufs, sondern auch Programmupdates im Falle vorgesehener Programmänderungen. Auch ließe sich mit der erfindungsgemäßen Vorrichtung die Prüfstation insgesamt fremdsteuern.

Des weiteren könnte die erfindungsgemäße Vorrichtung unter Anwendung des erfindungsgemäßen Verfahrens beim Ablesen von Gas-, Wasser- und Stromzählern verwendet werden.

Desweiteren ließe sich eine industrielle Anwendung im Rahmen einer Fertigungsautomation denken. Zu diesem Zwecke könnte beispielsweise auf einem automatischen Transportwagen oder dergleichen eine erfindungsgemäße mobile Vorrichtung installiert werden. Der Wagen fährt dann beispielsweise zu einer Materialannahmestelle, wo Rohmaterial oder Werkzeug aufgeladen würde. An dieser Stelle könnte das Soll-Bearbeitungsprogramm auf die erfindungsgemäße Vorrichtung bzw. in dessen Datenspeichereinrichtung übertragen werden. Beladen mit den Rohmaterialien, Werkzeugen oder dergleichen würde dann der Wagen beispielsweise in eine Produktionshalle einfahren. Beim Durchfahren einer Detektionsstelle, beispielsweise eines Tores, würde der Wagen bzw. die erfindungsgemäße Vorrichtung auf dem Wagen identifiziert werden. Programmabhängig gelangt der Wagen dann zur ersten Bearbeitungsmaschine und könnte das Bearbeitungsprogramm auf diese Maschine - aus der Datenspeichereinrichtung heraus - übertragen. Sukzessive würden dann sämtliche Bearbeitungsstationen nacheinander abgefahren werden. Zwischenschritte der Qualitätssicherung könnten hier zusätzlich und automatisch eingefügt werden. Sämtliche Daten würden in der Datenspeichereinrichtung der erfindungsgemäßen Vorrichtung erfaßt und am Ende des Fertigungsprozesses an einen Hauptrechner oder dergleichen überspielt werden. Dies könnte drahtlos mittels einer geeigneten Datenübertragungseinrichtung erfolgen. Auch hier bestünde ein großer Vorteil darin, daß zwischen den einzelnen Bearbeitungsmaschinen keinerlei Verkabelung zur zeitabhängigen Steuerung erforderlich wäre.

Abschließend sei hier hervorgehoben, daß die erfindungsgemäße Lehre durch das voranstehend beschriebene Ausführungsbeispiel sowie durch die voranstehend kurz erörterten Anwendungsbeispiele lediglich erläutert, aber keinesfalls beschränkt wird.

## Patentansprüche

1. Vorrichtung zum Erfassen, Verarbeiten, Speichern und Übertragen von Daten jeglicher Art mit mindestens einem Sensor (6) als Datenerfassungseinrichtung (1), einem Mikroprozessor (2), einer Datenspeichereinrichtung (3) und einer Datenübertragungseinrichtung (4), wobei die Datenerfassungseinrichtung (1), der Mikroprozessor (2), die Datenspeichereinrichtung (3) und die Datenübertragungseinrichtung (4) integral in einem Gehäuse (5) quasi monolitisch angeordnet sind und wobei die Vorrichtung je nach Anwendungsbereich und Einsatzgebiet mit unterschiedlichen, d.h. nach unterschiedlichen Detektionsprinzipien arbeitenden, Sensoren (6) ausrüstbar ist, indem die Sensoren (6) als miniaturisierte Peripheriegeräte an dem Gehäuse (5) - über entsprechende Schnittstellen - anbringbar sind,
**dadurch gekennzeichnet**, daß die Datenspeichereinrichtung (3) Programme zur Aktivierung bzw. Steuerung externer Geräte enthält, so daß beim Ankoppeln der Datenübertragungseinrichtung (4) an die jeweiligen Geräte die Programme an die Geräte übertragbar sind.

2. Vorrichtung nach Anspruch 1, dadurch gekennzeichnet, daß die Datenerfassungseinrichtung (1) mindestens einen berührungslos arbeitenden Sensor (6) aufweist.

3. Vorrichtung nach Anspruch 1 oder 2, dadurch gekennzeichnet, daß der Sensor (6) als Lichtsensor, insbesondere als Barcode-Lesestift, ausgeführt ist.

4. Vorrichtung nach Anspruch 1 oder 2, dadurch gekennzeichnet, daß der Sensor (6) als Temperatursensor ausgeführt ist.

5. Vorrichtung nach Anspruch 1 oder 2, dadurch gekennzeichnet, daß der Sensor (6) als kapazitiver, induktiver oder nach dem Wirbelstromprinzip arbeitender Sensor ausgeführt ist.

6. Vorrichtung nach einem der Ansprüche 1 bis 5, dadurch gekennzeichnet, daß die Datenerfassungseinrichtung (1) eine Gruppe von Sensoren (6) mit Sensoren unterschiedlicher Typen aufweist.

7. Vorrichtung nach einem der Ansprüche 1 bis 6, dadurch gekennzeichnet, daß die Datenspeichereinrichtung (3) miniaturisiert und in dem Gehäuse (5) des Sensors (6) integriert ist.

8. Vorrichtung nach einem der Ansprüche 1 bis 7, dadurch gekennzeichnet, daß die Datenspeichereinrichtung (3) vorzugsweise fest vorgegebene Daten zur Identifizierung der Datenspeichereinrichtung (3) enthält.

9. Vorrichtung nach einem der Ansprüche 1 bis 8, dadurch gekennzeichnet, daß die Datenspeichereinrichtung (3), vorzugsweise über eine Steckeinrichtung oder dgl., beliebig austauschbar ist.

10. Vorrichtung nach einem der Ansprüche 1 bis 9, dadurch gekennzeichnet, daß die Datenspeichereinrichtung (3) über eine Batterie bzw. einen integrierten Akkumulator mit elektrischer Energie versorgbar ist.

11. Vorrichtung nach einem der Ansprüche 1 bis 10, dadurch gekennzeichnet, daß die Datenübertragungseinrichtung (4) sowohl zur Datenausgabe aus der Datenspeichereinrichtung (3) als auch zur Dateneingabe in die Datenspeichereinrichtung (3) dient und entweder als drahtgebundene oder als drahtlose Kommunikationsschnittstelle, vorzugsweise im Sinne einer kombinierten, insbesondere mittels Infrarotlicht arbeitenden, Sender-/Empfängereinheit ausgeführt ist.

12. Vorrichtung nach Anspruch 11, dadurch gekennzeichnet, daß der Infrarot-Sender mindestens zwei in Serie geschaltete Sendedioden aufweist und daß der Infrarotempfänger eine vorgebbare Wellenlänge des Infrarotlichts detektiert.

13. Vorrichtung nach Anspruch 12, dadurch gekennzeichnet, daß die Datenübertragungseinrichtung (4) mehrere Kommunikationsschnittstellen aufweist .

14. Verfahren zum mobilen Erfassen, Verarbeiten, Speichern und Übertragen von Daten jeglicher Art, insbesondere unter Verwendung einer Vorrichtung mit einer Datenspeichereinrichtung, in der Steuerdaten zur Steuerung von Meßgeräten, Maschinen oder Rechnern abgelegt sind, nach einem der Ansprüche 1 bis 13,
**gekennzeichnet durch** folgende Verfahrensschritte:
Erfassung von Daten jeglicher Art mittels einer Datenerfassungseinrichtung;
Verarbeitung der Daten durch einen Mikroprozessor;
Speichern der verarbeiteten Daten in einer Datenspeichereinrichtung;
Übertragung der Daten aus dem Speicher auf ein externes Speichermedium oder einen externen Prozessor mittels einer Datenübertragungseinrichtung und
Übertragen der in der Datenspeichereinrichtung abgelegten Steuerdaten über die Datenübertragungseinrichtung an die Meßgeräte, Maschinen oder Rechner.

15. Verfahren nach Anspruch 14, dadurch gekennzeichnet, daß die Datenerfassung das Einspeisen von Daten über eine geeignete Schnittstelle oder drahtlos umfaßt und daß die Daten von Meßgeräten, Maschinen oder PC's generiert werden.

## Claims

1. Apparatus for collecting, processing, storing and transmitting data of any kind with at least one sensor (6) as data collection device (1), a microprocessor (2), a data storage device (3) and a data transmission device (4), wherein the data collection device (1), the microprocessor (2), the data storage device (3) and the data transmission device (4) are integrally disposed quasi-monolithically in a housing (5) and wherein depending upon the range of application and the field of use the apparatus can be equipped with different sensors (6), i.e. sensors operating according to different detection principles, the sensors (6) being attachable to the housing (5) - by way of corresponding interfaces - as miniaturised peripheral devices, characterised in that the data storage device (3) contains programs for activating or controlling external devices, so that when the data transmission device (4) is coupled to the particular devices the programs can be transmitted to the devices.

2. Apparatus as claimed in Claim 1, characterised in that the data collection device (1) has at least one sensor (6) which operates without contact.

3. Apparatus as claimed in Claim 1 or 2, characterised in that the sensor (6) is constructed as a light sensor, in particular a barcode reading wand.

4. Apparatus as claimed in Claim 1 or 2, characterised in that the sensor (6) is constructed as a temperature sensor.

5. Apparatus as claimed in Claim 1 or 2, characterised in that the sensor (6) is constructed as a capacitive sensor, an inductive sensor or a sensor operating according to the eddy current principle.

6. Apparatus as claimed in any one of claims 1 to 5, characterised in that the data collection device (1) has a group of sensors (6) with sensors of different types.

7. Apparatus as claimed in any one of claims 1 to 6, characterised in that the data storage device (3) is miniaturised and is integrated in the housing (5) of the sensor (6).

8. Apparatus as claimed in any one of claims 1 to 7, characterised in that the data storage device (3) preferably contains fixed predetermined data for identification of the data storage device (3).

9. Apparatus as claimed in any one of claims 1 to 8, characterised in that the data storage device (3) is replaceable as required, preferably by way of a plug connection or the like.

10. Apparatus as claimed in any one of claims 1 to 9, characterised in that the data storage device (3) can be supplied with electrical power by way of a battery or an integrated accumulator.

11. Apparatus as claimed in any one of claims 1 to 10, characterised in that the data transmission device (4) serves both for data output from the data storage device (3) and for data input into the data storage device (3) and is constructed either as a wire-connected or a wireless communication interface, preferably in the sense of a combined transmitter/receiver unit which operates in particular by means of infrared light.

12. Apparatus as claimed in Claim 11, characterised in that the infrared transmitter has at least two series-connected transmitting diodes and that the infrared receiver detects a predeterminable wavelength of the infrared light.

13. Apparatus as claimed in Claim 12, characterised in that the data transmission device (4) has a plurality of communication interfaces.

14. Method of mobile collection, processing, storage and transmission of data of any kind, particularly using apparatus with a data storage device in which control data are stored for controlling measuring devices, machines or computers, as claimed in any one of claims 1 to 13, characterised by the following method steps:
- collection of data of any kind by means of a data collection device;
- processing of the data by a microprocessor;
- storage of the processed data in a data storage device;
- transmission of the data from the store to an external storage medium or an external processor by means of a data transmission device and
- transmission of the control data stored in the data storage device by way of the data transmission device to the measuring devices, machines or computers.

15. Method as claimed in Claim 14, characterised in that the data collection includes the feeding in of data by way of a suitable interface or by wireless transmission and that the data are generated by measuring devices, machines or PCs.

## Revendications

1. Appareil pour la saisie, le traitement, l'enregistrement et la transmission de toutes sortes de données, avec au moins un capteur (6) en tant qu'unité de saisie de données (1), avec un microprocesseur (2), avec une unité d'enregistrement ou de mise en mémoire de données (3) et avec une unité de transmission de données (4), où l'unité de saisie de données (1), le microprocesseur (2), l'unité d'enregistrement ou de mise en mémoire de données (3) et l'unité de transmission de données (4) sont disposés intégralement et d'une manière quasi monolithique dans un boîtier (5), et où l'appareil peut, suivant le domaine d'application et d'utilisation, être équipé de capteurs (6) divers, à savoir fonctionnant selon divers principes de détection, par le fait qu'en tant que dispositifs périphériques miniaturisés les capteurs (6) peuvent, par des interfaces adéquats, être connectés au boîtier (5),
caractérisé en ce que l'unité d'enregistrement ou de mise en mémoire de données (3) contient des programmes pour l'activation ou la commande d'appareils extérieurs, de telle sorte que les programmes peuvent être transmis aux appareils extérieurs lors de l'accouplement aux appareils en question de l'unité de transmission de données (4).

2. Appareil suivant la revendication 1, caractérisé en ce que l'unité de saisie de données (1) présente au moins un capteur (6) fonctionnant sans contact.

3. Appareil suivant la revendication 1 ou 2, caractérisé en ce que le capteur (6) a la forme d'un capteur lumineux, et notamment est un crayon de lecture code-barres.

4. Appareil suivant la revendication 1 ou 2, caractérisé en ce que le capteur (6) a la forme d'un capteur de température.

5. Appareil suivant la revendication 1 ou 2, caractérisé en ce que le capteur (6) est un capteur capacitif, inductif ou fonctionnant suivant le principe des courants de Foucault.

6. Appareil suivant l'une quelconque des revendications de 1 à 5, caractérisé en ce que l'unité de saisie de données (1) présente un groupe de capteurs (6) avec des capteurs de différents types.

7. Appareil suivant l'une quelconque des revendications de 1 à 6, caractérisé en ce que l'unité d'enregistrement ou de mise en mémoire de données (3) est miniaturisée et intégrée dans le boîtier (5) du capteur (6).

8. Appareil suivant l'une quelconque des revendications de 1 à 7, caractérisé en ce que l'unité d'enregistrement ou de mise en mémoire de données (3) contient de préférence des données de consigne pour l'identification de l'unité d'enregistrement ou de mise en mémoire de données (3).

9. Appareil suivant l'une quelconque des revendications de 1 à 8, caractérisé en ce que l'unité d'enregistrement ou de mise en mémoire de données (3) est interchangeable à volonté de préférence au moyen d'une unité à enficher ou similaire.

10. Appareil suivant l'une quelconque des revendications de 1 à 9, caractérisé en ce que l'unité d'enregistrement ou de mise en mémoire de données (3) est alimentée en énergie électrique de préférence par une batterie ou par un accumulateur intégré.

11. Appareil suivant l'une quelconque des revendications de 1 à 10, caractérisé en ce que l'unité de transmission de données (4) sert tant à la sortie des données depuis l'unité d'enregistrement ou de mise en mémoire de données (3) qu'également à l'entrée de données dans l'unité d'enregistrement ou de mise en mémoire de données (3) et a la forme d'un interface de communication avec ou sans fil, de préférence dans le sens d'une unité émettrice-réceptrice combinée, notamment à fonctionnement par infra-rouge.

12. Appareil suivant la revendication 11, caractérisé en ce que l'émetteur à infra-rouge présente au moins deux diodes émettrices couplées en série et en ce que le récepteur à infra-rouge détecte une longueur d'onde de consigne de la lumière infra-rouge.

13. Appareil suivant la revendication 12, caractérisé en ce que l'unité de transmission de données (4) présente plusieurs interfaces de communication.

14. Procédé pour la saisie, le traitement, l'enregistrement et la transmission mobiles de toutes sortes de données, notamment avec l'utilisation d'un appareil avec une unité d'enregistrement ou de mise en mémoire de données, dans laquelle sont contenues des données pour la commande d'appareils de mesure, de machines ou d'ordinateurs, suivant l'une quelconque des revendications de 1 à 13,
caractérisé par les phases opératoires suivantes:
Saisie de données de toute nature au moyen d'une unité de saisie de données;
traitement des données par un microprocesseur;
mise en mémoire des données traitées dans une unité d'enregistrement ou de mise en mémoire de données;
transmission, à l'aide d'une unité de transmission de donnés, des données depuis la mémoire vers un dispositif à mémoire externe ou vers un processeur externe, et
transmission des données de commande contenues dans l'unité d'enregistrement ou de mémoire, par l'intermédiaire de l'unité de transmission de données, vers les appareils de mesure, les machines ou les ordinateurs.

15. Procédé suivant la revendication 14, caractérisé en ce que la saisie des données comprend l'injection de données à l'aide d'un interface adéquat ou sans fil et en ce que les données sont engendrées par des appareils de mesure, par des machines ou par des ordinateurs personnels.
